# EUROPEAN PATENT APPLICATION

(11) **EP 4 667 637 A1**
(43) Date of publication of application: **24.12.2025**
(21) Application number: 23922307.6
(22) Date of filing: 26.09.2023
(51) Int. Cl.: D06F 25/00, D06F 58/20, D06F 58/26

(54) **LAUNDRY TREATMENT APPARATUS**

(30) Priority: 17.02.2023 CN 202320309263 U
(71) Applicant: Nanjing Roborock Innovation Technology Co., Ltd., Nanjing, Jiangsu 210039 (CN)
(72) Inventor: WEN, Bo, Shenzhen, Guangdong 518000 (CN)
(74) Representative: Maiwald GmbH
(86) International application number: PCT/CN2023/121653
(87) International publication number: WO 2024/169189

(57) **Abstract**

A laundry treatment apparatus, comprising: a moisture adsorption and moisture removal component (10), which is communicated with a drum (20), the moisture adsorption and moisture removal component (10) being used for adsorbing moisture from a humid airflow in the drum (20); and a heat pump heating assembly, which is communicated with the moisture adsorption and moisture removal component (10) and is used for outputting a dry regenerated airflow to the moisture adsorption and moisture removal component (10), so as to desorb moisture from at least part of the moisture adsorption and moisture removal component (10), such that the moisture adsorption and moisture removal component (10) recovers dehumidification capacity. The moisture adsorption and moisture removal component (10) is arranged above or below the drum (20), and the plane where the moisture adsorption and moisture removal component (10) is located is parallel to a rotation axis of the drum (20). A recycling and regeneration function is added for the moisture adsorption and moisture removal component (10) so as to continuously maintain the moisture adsorption capacity of the moisture adsorption and moisture removal component (10), thus facilitating sustained and efficient dehumidification and drying of clothes in the drum (20), and saving power and time.

## Description

The present application claims priority to Chinese Patent Application No. 202320309263.5, filed with the China National Intellectual Property Administration on February 17, 2023 and entitled "CLOTHING TREATMENT APPARATUS", which is incorporated herein by reference in its entirety.

### TECHNICAL FIELD

The present application relates to the technical field of household appliances, and in particular, to a clothing treatment apparatus.

### BACKGROUND

With the improvement of people's living standards, as well as the continuous advancement of scientific technology and product performance, there is an increasing demand for the functionality of household appliances to meet the growing domestic usage needs and reduce manual labor.

When it comes to laundry, one of the most time-consuming household physical labor, the entire laundry process involves essential steps including washing, air-drying, and organizing and storing. Traditional laundry washing machines can only complete the washing function, while tasks like air-drying, drying, and organizing and storing still require manual labor. The combo washer/dryer machine newly launched in the industry integrates washing and drying functions, allowing completion of both processes with a single start. After washing, it automatically proceeds to dry the clothes, thereby greatly reducing the manual effort required for air-drying and storing.

The inventors have found that the drying system of the existing combo washer/dryer machines employ a moisture adsorption assembly (an evaporator or a heat pump) to heat and dehumidify humid air in a drum of the washer/dryer machine to obtain high-temperature air, and then the high-temperature air re-enters the drum of the washer/dryer machine for drying, thereby evaporating the moisture in the clothing. However, the existing evaporator or heat pump maintains a uniform temperature distribution. During the evaporation process of the humid air, the moisture adsorption capacity of the moisture adsorption assembly for the humid air decreases, resulting in low moisture adsorption efficiency, prolonged drying time, and high power consumption. In particular, in an environment where the air temperature is low, the temperature of the humid air is also reduced, making it difficult for the evaporator to reach the moisture adsorption temperature, thereby further reducing the moisture adsorption efficiency, prolonging the drying time, and increasing the power consumption.

### SUMMARY

### (I) Purpose of Application

The purpose of the present application is to provide a clothing treatment apparatus. By adding the cyclic regeneration function to the moisture adsorption-desorption member, the moisture adsorption capacity of the moisture adsorption-desorption member is continuously maintained, enabling continuous and efficient dehumidification and drying, thereby saving power and time.

### (II) Technical Solution

A first aspect of the present application provides a clothing treatment apparatus. The clothing treatment apparatus includes: a moisture adsorption-desorption member in communication with a drum, where the moisture adsorption-desorption member is configured to adsorb moisture in a humid airflow from the drum; and a heat pump heating assembly in communication with the moisture adsorption-desorption member and configured to output a dry regeneration airflow to the moisture adsorption-desorption member to desorb moisture from at least part of the moisture adsorption-desorption member, so as to enable the moisture adsorption-desorption member to recover the dehumidification capacity. The moisture adsorption-desorption member is arranged above or below the drum, and a plane where the moisture adsorption-desorption member is located is parallel to a rotational axis of the drum.

Further, the moisture adsorption-desorption member includes: a rotary disk housing provided therein with a partition member to at least divide the rotary disk housing into a moisture adsorption zone and a regeneration zone; and a rotary disk accommodated in the rotary disk housing, where the rotary disk is arranged to rotate relative to the rotary disk housing. The moisture adsorption zone is in communication with the drum, and the regeneration zone is in communication with the heat pump heating assembly.

Further, the moisture adsorption-desorption member further includes a driving assembly. The driving assembly includes a motor, and the motor is configured to drive the rotary disk to rotate.

Further, the heat pump heating assembly includes: an evaporator in communication with the regeneration zone and configured to condense the regeneration airflow output from the regeneration zone to form a low-temperature and dry regeneration airflow; and a condenser in communication with the evaporator and configured to heat the low-temperature and dry regeneration airflow to output to the regeneration zone, so as to desorb moisture from at least part of the rotary disk and enable the rotary disk to recover the dehumidification capacity.

Further, the rotary disk housing includes a first rotary disk housing and a second rotary disk housing; a first partition member is arranged along the radial direction of the second rotary disk housing to divide the second rotary disk housing into a first moisture adsorption zone and a first regeneration zone; the first rotary disk housing is provided with a second partition member to divide the first rotary disk housing into a second moisture adsorption zone and a second regeneration zone. The second partition member is arranged opposite to the first partition member, and the rotary disk is located between the second partition member and the first partition member.

Further, the clothing treatment apparatus further includes a regeneration housing in communication with the first regeneration zone and/or the second regeneration zone. The regeneration housing is located on one side of the rotary disk to desorb moisture from part of the rotary disk corresponding to the regeneration zone; the regeneration housing is provided therein with an airflow space to form a third airflow channel; a gap is present between the other side of the rotary disk and an inner wall of the first regeneration zone of the second rotary disk housing to form a fourth airflow channel. The third airflow channel or the fourth airflow channel is in communication with the condenser, and the fourth airflow channel or the third airflow channel is in communication with the evaporator, so that the relatively low-temperature and dry regeneration airflow is heated through the condenser, enters the third airflow channel or the fourth airflow channel and passes through the rotary disk to reach the fourth airflow channel or the third airflow channel, and is then condensed through the evaporator to form the relatively low-temperature and dry regeneration airflow and re-enters the condenser for heating.

Further, in the second moisture adsorption zone, a gap is present between one side surface of the rotary disk and part of an inner wall of the first rotary disk housing to form a first airflow channel; in the first moisture adsorption zone, a gap is present between the other opposite side surface of the rotary disk and part of an inner wall of the second rotary disk housing to form a second airflow channel. The second airflow channel or the first airflow channel is in communication with a drum air outlet, and the first airflow channel or the second airflow channel is in communication with a drum air inlet, so that the humid airflow in the drum flows through the second airflow channel or the first airflow channel and passes through the rotary disk to reach the first airflow channel or the second airflow channel.

Further, the condenser is in communication with the drum air inlet and the moisture adsorption zone, so that the airflow in the moisture adsorption zone passes through the rotary disk to reach the first airflow channel or the second airflow channel and enter the condenser. The condenser is configured to preheat a generated dry airflow before it is input into the drum.

Further, the rotary disk housing is a circular structure, and a first partition member can be arranged along a radial direction of the second rotary disk housing to divide the second rotary disk housing into a first moisture adsorption zone and a first regeneration zone, such that both the first moisture adsorption zone and the first regeneration zone are sector-shaped spaces.

Further, a drying device further includes a first switching mechanism. The first switching mechanism is located between the condenser and the rotary disk housing, and the first switching mechanism is configured to control communication or disconnection between the condenser and the moisture adsorption zone.

Further, the drying device further includes a second switching mechanism. The second switching mechanism is located between the evaporator and the condenser, and the second switching mechanism is configured to control communication or disconnection between the evaporator and the condenser.

Further, the drying device further includes: a first rigid member and a first flexible member sequentially stacked and arranged on the first partition member, where the first flexible member is adjacent to the rotary disk; and a second rigid member and a second flexible member sequentially stacked and arranged on the second partition member, where the second flexible member is adjacent to the rotary disk. The first rigid member and/or the second rigid member are provided with a groove for accommodating the first flexible member and/or the second flexible member in a side facing the rotary disk; the first flexible member and/or the second flexible member are arranged in the groove and protrude from an edge of the groove.

Further, the first flexible member and the second flexible member are respectively in contact with surfaces of the rotary disk; or a gap of 0.2-2 mm is provided between the first flexible member and the rotary disk and between the second flexible member and the rotary disk.

Further, the drum air inlet and the drum air outlet are respectively arranged at two opposite ends of the rotational axis of the drum; the drum air inlet and/or the drum air outlet are higher than the rotational axis of the drum; or the drum air inlet and/or the drum air outlet are higher than the highest water level in the drum.

### (III) Beneficial Effects

The above technical solutions of the present application have the following beneficial technical effects.

The moisture adsorption-desorption member can adsorb moisture in the humid airflow from the drum, thereby outputting the generated dry airflow to the drum, and the dry airflow enters the drum through the drum air inlet and is in full contact with the clothing, thereby improving the drying efficiency and reducing energy consumption. After the regeneration airflow exchanges heat with the heat pump heating assembly, a dry and high-temperature airflow can be obtained, and the moisture of at least part of the moisture adsorption-desorption member can be desorbed, so as to enable the moisture adsorption-desorption member to recover the moisture adsorption capacity. Therefore, in the embodiments of the present application, by adding the cyclic regeneration function to the moisture adsorption-desorption member, the moisture adsorption capacity of the moisture adsorption-desorption member is continuously maintained, enabling continuous and efficient dehumidification and drying, thereby saving power and time.

### BRIEF DESCRIPTION OF THE DRAWINGS

FIG. 1 is a schematic structural diagram of a clothing treatment apparatus according to a first embodiment of the present application;
FIG. 2 is a schematic structural diagram of a moisture adsorption-desorption member according to a second embodiment of the present application;
FIG. 3 is a schematic structural diagram of a moisture adsorption-desorption member according to a third embodiment of the present application; and
FIG. 4 is an exploded view of a moisture adsorption-desorption member according to a fourth embodiment of the present application.

### Reference numerals:

moisture adsorption-desorption member 10; drum 20; evaporator 30; condenser 40; regeneration housing installation part 50; first rigid member 51; first flexible member 52; second rigid member 53; second flexible member 54; first switching mechanism 60; second switching mechanism 70;
first rotary disk housing 111; second partition member 1111; air outlet duct 1112; second rotary disk housing 112; first partition member 1121; rotary disk 120; sealing gasket 510.

### DETAILED DESCRIPTION

To make the objectives, technical solutions, and advantages of the present application clearer, the present application is further described below in detail with reference to specific embodiments and the accompanying drawings. It should be understood that these descriptions are merely exemplary and are not intended to limit the scope of the present application. In addition, in the following description, descriptions of well-known structures and techniques are omitted to avoid unnecessarily obscuring the concepts of the present application.

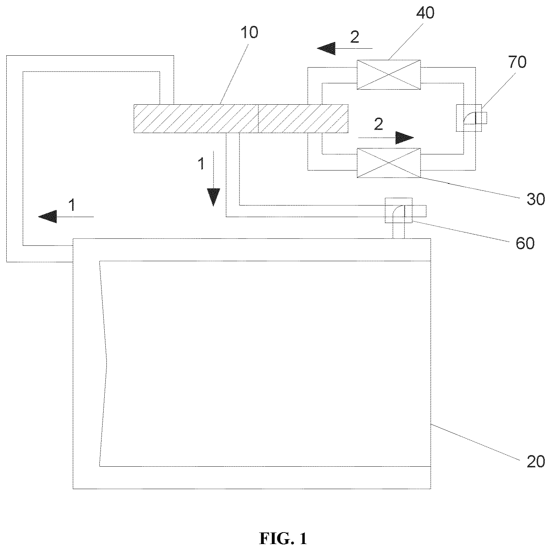

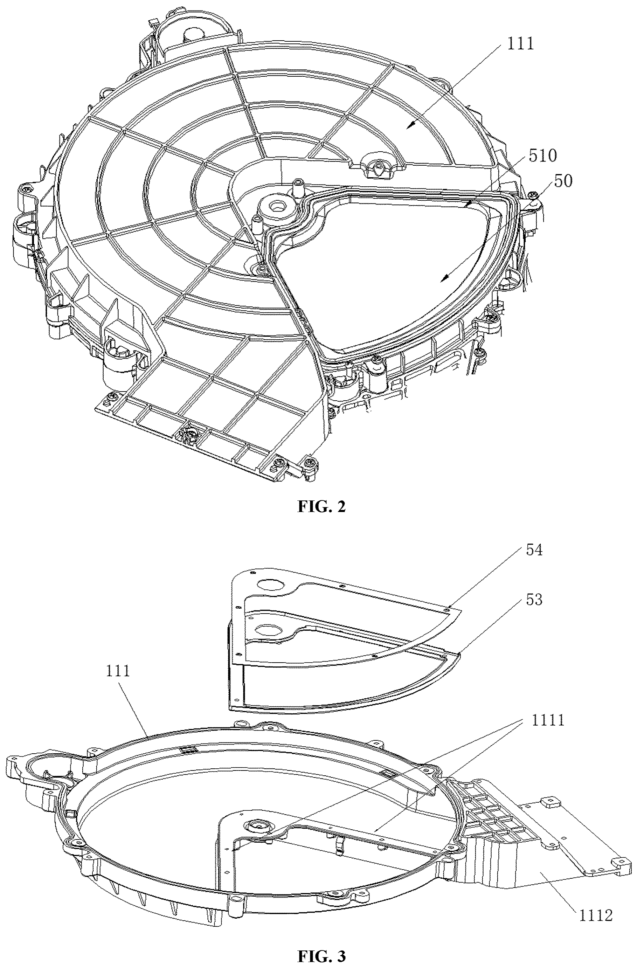

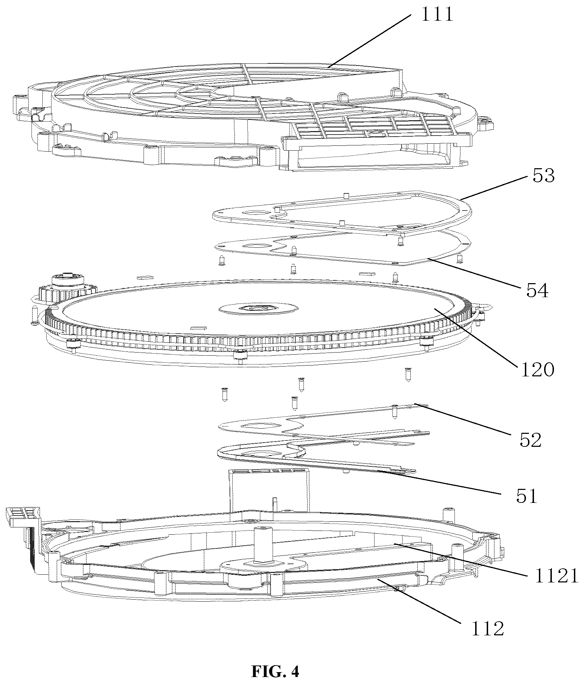

A first aspect of the present application provides a clothing treatment apparatus. As shown in FIGs. 1-4, the clothing treatment apparatus includes a moisture adsorption-desorption member 10 and a heat pump heating assembly. The moisture adsorption-desorption member 10 is in communication with a drum 20; the moisture adsorption-desorption member is configured to adsorb moisture in the humid airflow from the drum and output the generated dry airflow to the drum; the heat pump heating assembly is in communication with the moisture adsorption-desorption member and is configured to output the dry regeneration airflow to the moisture adsorption-desorption member to desorb moisture from at least part of the moisture adsorption-desorption member, so as to enable the moisture adsorption-desorption member to recover the moisture adsorption capacity. The moisture adsorption-desorption member is arranged above or below the drum, and the plane where the moisture adsorption-desorption member is located is parallel to a rotational axis of the drum. The moisture adsorption-desorption member 10 may be made of, for example, a material with good moisture adsorption performance, and can adsorb moisture in the humid airflow from the drum 20, thereby outputting the generated dry airflow to the drum. The dry circulating airflow enters the drum through a drum air inlet and is in full contact with the clothing, thereby improving the drying efficiency and reducing energy consumption. The heat pump heating assembly may include a compressor, a condenser 40, an evaporator 30, etc., which are sequentially connected through copper pipes to form a heat pump circulation system. A refrigerant is arranged in the copper pipes, and heat exchange with an external regeneration airflow is achieved through the flowing of the refrigerant. After the regeneration airflow exchanges heat with the heat pump heating assembly, a relatively dry and high-temperature airflow can be obtained, and the moisture of at least part of the moisture adsorption-desorption member can be desorbed, so as to enable the moisture adsorption-desorption member to at least partially recover the moisture adsorption capacity. Therefore, in the embodiments of the present application, by adding the cyclic regeneration function to the moisture adsorption-desorption member 10, the moisture adsorption capacity of the moisture adsorption-desorption member 10 is continuously maintained, enabling continuous and efficient dehumidification and drying, thereby saving power and time. The direction of an arrow 1 shown in FIG. 1 is the flow direction of the humid airflow from the drum 20, and the direction of an arrow 2 shown in FIG. 1 is the flow direction of the regeneration airflow.

In some embodiments, the moisture adsorption-desorption member 10 may be horizontally arranged above or below the drum 20, and the plane where the moisture adsorption-desorption member 10 is located is parallel to the rotational axis of the drum 20, such that the overall structure of the clothing treatment apparatus is compact and the occupied space is small.

In some embodiments, the moisture adsorption-desorption member includes: a rotary disk housing provided therein with a partition member to at least divide the rotary disk housing into a moisture adsorption zone and a regeneration zone; and a rotary disk 120 accommodated in the rotary disk housing, where the rotary disk is arranged to rotate relative to the rotary disk housing. The moisture adsorption zone is in communication with the drum, and the regeneration zone is in communication with the heat pump heating assembly. The rotary disk 120 may be made of a material with good moisture adsorption performance, for example, may be zeolite, lithium chloride, silica gel, modified silica gel, or 13X (sodium X-type) molecular sieve. Specifically, the moisture adsorption-desorption member may further include a driving assembly. The driving assembly may include a motor, and the motor may drive the rotary disk 120 to rotate. The moisture adsorption zone may be fed with the humid airflow from the drum 20, the humid airflow passes through the rotary disk 120 to obtain the dry circulating airflow, and then the dry circulating airflow re-enters the drum; the regeneration zone may be fed with the high-temperature and dry regeneration airflow to desorb moisture from part of the rotary disk 120. Therefore, the rotary disk 120 cyclically passes through the moisture adsorption zone and the regeneration zone during its continuous rotation in the circumferential direction, thereby repeatedly completing the process of moisture adsorption and desorption.

In some embodiments, the heat pump heating assembly includes: an evaporator 30 in communication with the regeneration zone and configured to condense the regeneration airflow output from the regeneration zone to form a relatively low-temperature and dry regeneration airflow; and a condenser 40 in communication with the evaporator 30 and configured to heat the relatively low-temperature and dry regeneration airflow to output to the regeneration zone, so as to desorb moisture from at least part of the rotary disk and enable the rotary disk 120 to recover the moisture adsorption capacity. The regeneration airflow becomes a high-temperature and high-humidity regeneration airflow after desorbing moisture from the rotary disk 120 through the regeneration zone, and the high-temperature and high-humidity regeneration airflow enters the evaporator 30 for heat exchange, so as to condense and dewater the high-temperature and high-humidity regeneration airflow to obtain a low-temperature and dry regeneration airflow. The low-temperature and dry regeneration airflow enters the condenser 40 for heating, and the resulting high-temperature and dry regeneration airflow enters the regeneration zone, so as to desorb moisture from part of the rotary disk 120 rotating to the regeneration zone. This process repeats cyclically.

In some embodiments, the rotary disk housing includes a first rotary disk housing 111 (i.e., a rotary disk upper housing) and a second rotary disk housing 112 (i.e., a rotary disk lower housing). For example, the rotary disk housing may be arranged as a circular structure, and a first partition member 1121 may be arranged along the radial direction of the second rotary disk housing 112 to divide the second rotary disk housing 112 into a first moisture adsorption zone and a first regeneration zone, such that both the first moisture adsorption zone and the first regeneration zone are substantially sector-shaped spaces. The first rotary disk housing 111 is provided with a second partition member 1111 to divide the first rotary disk housing 111 into a second moisture adsorption zone and a second regeneration zone. The second partition member 1111 is arranged opposite to the first partition member 1121, and the rotary disk 120 is located between the second partition member and the first partition member. In this way, the first moisture adsorption zone and the second moisture adsorption zone are symmetrically arranged relative to the side surface of the rotary disk 120, and similarly, the first regeneration zone and the second regeneration zone are also symmetrically arranged relative to the side surface of the rotary disk 120. For example, a groove is disposed on the first rotary disk housing 111 or the second rotary disk housing 112, a sealing strip is arranged in the groove, and the first rotary disk housing 111 and the second rotary disk housing 112 are connected in a snap-fit manner to implement sealing. The area of the moisture adsorption zone may be set larger than the area of the regeneration zone, so that the majority of the rotary disk 120 is in the moisture adsorption zone, thereby further improving the moisture adsorption efficiency and the moisture adsorption effect of the rotary disk 120. Both the second partition member 1111 and the first partition member 1121 may be arranged to protrude from the inner wall of the first rotary disk housing 111 and the inner wall of the second rotary disk housing 112, respectively, and the height of the second partition member 1111 and the first partition member 1121 should preferably be designed to avoid interference with the rotational sealing of the rotary disk 120, thus preventing cross-leakage between the humid circulating airflow discharged from the drum and the regeneration airflow.

In some embodiments, to enable the high-temperature and dry regeneration airflow to be evenly delivered into the rotary disk 120 to improve its rapid moisture desorption capacity, a preferred solution is that the clothing treatment apparatus further includes a regeneration housing. The second regeneration zone of the first rotary disk housing 111 may be provided with a regeneration housing installation part 50, and the regeneration housing is installed to the regeneration housing installation part of the first rotary disk housing 111. The regeneration housing is located on one side of the rotary disk 120 to desorb moisture from part of the rotary disk corresponding to the regeneration zone. Certainly, the regeneration housing may not be provided, with the first regeneration zone and the second regeneration zone symmetrically arranged on the first rotary disk housing 111 and the second rotary disk housing 112. The regeneration housing is provided therein with an airflow space to form a third airflow channel; a gap is present between the other side of the rotary disk 120 and the inner wall of the first regeneration zone of the second rotary disk housing 112 to form a fourth airflow channel. The regeneration housing may be arranged as a sector-shaped structure, roughly corresponding to the shape of the second regeneration zone, and may be located above the rotary disk 120 and adjacent to the rotary disk 120. The regeneration housing may be provided therein with an air equalizing plate, and the air equalizing plate may be provided with several air holes, so that the high-temperature and dry regeneration airflow entering the third airflow channel is evenly sent to the rotary disk 120 and passes through the rotary disk 120 from top to bottom to reach the fourth airflow channel; when the rotary disk 200 rotates to the regeneration zone, the regeneration airflow heats this part of the rotary disk 120 to enable rapid desorption of the moisture from this part, the moisture is then carried away by the regeneration airflow into the evaporator 30 and is condensed by the evaporator 30 to form a relatively low-temperature and dry regeneration airflow, and this airflow then re-enters the condenser 40 for heating, so as to obtain the high-temperature and dry regeneration airflow to enter the third airflow channel. This process repeats cyclically. As a result, the rotary disk 120 maintains a good moisture adsorption capacity, thereby improving the moisture adsorption efficiency and effect. Specifically, a sealing gasket 510 may be disposed between the regeneration housing and the first rotary disk housing 111 to prevent leakage of the regeneration airflow, thereby achieving a certain sealing effect while preventing heat loss.

In some embodiments, in the second moisture adsorption zone, a gap is present between the top surface of the rotary disk 120 and part of the inner wall of the first rotary disk housing 111 to form a first airflow channel; in the first moisture adsorption zone, a gap is present between the bottom surface of the rotary disk 120 and part of the inner wall of the second rotary disk housing 112 to form a second airflow channel. The second airflow channel or the first airflow channel is in communication with a drum air outlet, and the first airflow channel or the second airflow channel is in communication with the drum air inlet, so that the humid airflow in the drum 20 flows through the second airflow channel or the first airflow channel and passes through the rotary disk 120 to reach the first airflow channel or the second airflow channel. In the exemplary embodiments, the humid circulating airflow discharged from the drum enters the second airflow channel and diffuses, the humid circulating airflow passes through the rotary disk 120 from bottom to top, and the rotary disk 120 adsorbs moisture in the humid circulating airflow. As a result, the humid circulating airflow can be changed into the dry circulating airflow, and the dry circulating airflow enters the drum through the drum air inlet and is in full contact with the clothing, thereby improving the drying efficiency and reducing the energy consumption. The embodiments of the present application, by employing the rotary disk 120 to adsorb moisture in the humid circulating airflow, can prevent the decrease in the moisture adsorption capacity for humid air caused by using the evaporator.

In some embodiments, the condenser 40 is in communication with the drum air inlet and the moisture adsorption zone, so that the airflow in the moisture adsorption zone passes through the rotary disk 120 to reach the first airflow channel or the second airflow channel and enter the condenser. The condenser is configured to preheat the generated dry airflow before it is input into the drum. In the case where the condenser in the heat pump heating assembly is configured to preheat the generated dry airflow before it is input into the drum, the condenser can certainly be replaced with a heater to increase the temperature of the dry airflow, ensuring that the airflow is in full contact with the clothing, thereby improving the drying efficiency.

In some embodiments, a drying device further includes a first switching mechanism 60. The first switching mechanism 60 is located between the condenser and the rotary disk housing, and the first switching mechanism is configured to control the communication or disconnection between the condenser and the moisture adsorption zone. The first rotary disk housing 111 may be provided with an air outlet duct 1112, and the first switching mechanism may be installed at the joint between the air outlet duct 1112 and the air inlet of the condenser 40. The first switching mechanism may be a solenoid valve. By controlling the first switching mechanism, the air outlet duct 1112 and the air inlet of the condenser 40 may be disconnected at the joint therebetween, so that the humid airflow from the drum reaches the moisture adsorption zone, passes through the rotary disk 120 from top to bottom (or from bottom to top), and then becomes the dry airflow and is directly discharged to the atmosphere, forming an open circuit. Alternatively, by controlling the first switching mechanism, the air outlet duct 1112 and the air inlet of the condenser 40 may be connected at the joint therebetween, so that the humid airflow from the drum reaches the moisture adsorption zone, passes through the rotary disk 120 from top to bottom (or from bottom to top), then becomes the dry airflow and enters the condenser for heating, and then re-enters the drum, forming a closed-circuit circulating airflow.

In some embodiments, the drying device further includes a second switching mechanism 70. The second switching mechanism 70 is located between the evaporator 30 and the condenser 40, and the second switching mechanism is configured to control the communication or disconnection between the evaporator and the condenser. The second switching mechanism may be a solenoid valve, and the second switching mechanism may be disposed at the joint between the air outlet of the evaporator 30 and the air inlet of the condenser 40. By controlling the second switching mechanism, the air outlet of the evaporator 30 and the air inlet of the condenser 40 may be disconnected at the joint therebetween, so that the high-temperature and high-humidity regeneration airflow may be condensed and dewatered, and then the resulting low-temperature and dry regeneration airflow is directly discharged to the atmosphere, forming an open circuit. Alternatively, by controlling the second switching mechanism, the air outlet of the evaporator 30 and the air inlet of the condenser 40 can be connected at the joint therebetween, so that the high-temperature and high-humidity regeneration airflow is condensed and dewatered, the resulting low-temperature and dry regeneration airflow is input into the condenser 40 for heating, and then the airflow enters the regeneration zone, passes through the rotary disk 120 from top to bottom, and re-enters the evaporator 30, thereby forming a closed-circuit regeneration airflow.

In some embodiments, the drying device further includes: a first rigid member 51 and a first flexible member 52 sequentially stacked and arranged on the first partition member 1121, the first flexible member being adjacent to the rotary disk; and a second rigid member 53 and a second flexible member 54 sequentially stacked and arranged on the second partition member 1111, the second flexible member being adjacent to the rotary disk. The first rigid member and/or the second rigid member are provided with a groove for accommodating the first flexible member and/or the second flexible member in a side facing the rotary disk, and the first flexible member and/or the second flexible member are arranged in the groove and protrude from the edge of the groove. The first flexible member 52 or a part thereof is embedded in the groove of the first rigid member 51, the first flexible member 52 is relatively fixed to the first rigid member 51 by the tension force generated by the compressive deformation of the first flexible member 52, and then the first rigid member 51 is fixed to the first partition member by screws. Similarly, the second flexible member 54 can be fixed to the second rigid member 53, and then the second rigid member 53 is fixed to the second partition member by screws. The first flexible member 52 and the second flexible member 54 are arranged to closely follow, but not in contact with, the upper and lower surfaces of the rotary disk 120, respectively, that is, the rotary disk does not interfere with the flexible members facing the upper and lower surfaces of the rotary disk during the rotation process, and meanwhile, they are close enough to maintain relative isolation of the airflow in the regeneration zone and the moisture adsorption zone located on the same surface of the rotary disk 120 and on two sides of the flexible members, thereby achieving a dynamic sealing effect. The first flexible member 52 and the second flexible member 54 may be soft rubber or a brush strip. The first flexible member and the second flexible member may be made of the same material or different materials.

In some embodiments, the first flexible member 52 and the second flexible member 54 are respectively in contact with the surfaces of the rotary disk; alternatively, a gap of 0.2-2 mm is provided between the first flexible member and the rotary disk and between the second flexible member and the rotary disk. Certainly, either the first flexible member 52 or the second flexible member 54 may be in contact with or even interfere with the upper/lower surface of the rotary disk 120, or the first flexible member or the second flexible member may be in contact with or even interfere with the upper and lower surfaces of the rotary disk, respectively, so as to achieve a better sealing effect. However, this correspondingly increases the rotational resistance of the rotary disk 120. In this embodiment, a preferred preset gap range is defined between the first flexible member 52 and the second flexible member 54 and the upper and lower surfaces of the rotary disk 120. Within this range, the first flexible member 52 and the second flexible member 54 are not in contact with the rotary disk 120, and the airflow in the regeneration zone and the moisture adsorption zone can be relatively isolated. This achieves a certain degree of sealing effect, thereby achieving a dynamic sealing effect. In addition, the friction between the first flexible member 52 and the second flexible member 54 and the rotary disk 120 can also be prevented, thereby reducing the rotational resistance of the rotary disk 120.

In some embodiments, the clothing treatment apparatus may include a drum and a drying device. The drum is provided with a drum air inlet and a drum air outlet. The drum air inlet and the drum air outlet are respectively arranged at two opposite ends of the rotational axis of the drum; the drum air inlet and/or the drum air outlet are higher than the rotational axis of the drum; or the drum air inlet and/or the drum air outlet are higher than the highest water level in the drum. The drying device may include a moisture adsorption-desorption member 10 and a heat pump heating assembly. The moisture adsorption-desorption member 10 may include a rotary disk 120. Specifically, a second airflow channel or a first airflow channel is in communication with the drum air outlet, and the first airflow channel or the second airflow channel is in communication with the drum air inlet. The humid airflow in the drum flows through the second airflow channel or the first airflow channel and passes through the rotary disk 120 to reach the first airflow channel or the second airflow channel to form the dry airflow. The rotary disk 120 is configured to adsorb moisture in the humid airflow from the drum. The moisture adsorption-desorption member 10 may be made of, for example, a material with good moisture adsorption performance, and can adsorb moisture in the humid airflow from the drum 20, thereby outputting the generated dry airflow to the drum. The dry circulating airflow enters the drum through the drum air inlet and is in full contact with the clothing, thereby improving the drying efficiency and reducing energy consumption. The heat pump heating assembly may include a compressor, a condenser 40, an evaporator 30, etc., which are sequentially connected through copper pipes to form a heat pump circulation system. A refrigerant is arranged in the copper pipes, and heat exchange with a regeneration airflow is achieved through the flowing of the refrigerant. After the regeneration airflow exchanges heat with the heat pump heating assembly, a dry and high-temperature airflow can be obtained, and the moisture of at least part of the moisture adsorption-desorption member can be desorbed, so as to enable the moisture adsorption-desorption member to recover the moisture adsorption capacity. Therefore, in the embodiments of the present application, by adding the cyclic regeneration function to the moisture adsorption-desorption member 10, the moisture adsorption capacity of the moisture adsorption-desorption member 10 is continuously maintained, enabling continuous and efficient dehumidification and drying, thereby saving power and time. The direction of an arrow 1 shown in FIG. 1 is the flow direction of the humid airflow from the drum 20, and the direction of an arrow 2 shown in FIG. 1 is the flow direction of the regeneration airflow.

**In** some embodiments, both the drum air outlet and the drum air inlet are arranged above the highest water level. In this case, it is unnecessary to wait for complete drainage of the washing water inside the drum before activating the drying device, thereby achieving greater flexibility in choosing the timing to activate the drying device.

It should be understood that the above specific embodiments of the present application are merely used to exemplarily illustrate or explain the principles of the present application, and do not constitute a limitation on the present application. Therefore, any modification, equivalent replacement, improvement, and the like made without departing from the spirit and scope of the present application shall all fall within the protection scope of the present application. Furthermore, the appended claims of the present application are intended to cover all changes and modifications that fall within the scope and boundaries of the appended claims, or equivalents of such scope and boundaries.

## Claims

1. A clothing treatment apparatus, comprising:
a moisture adsorption-desorption member in communication with a drum, wherein the moisture adsorption-desorption member is configured to adsorb moisture in a humid airflow from the drum; and
a heat pump heating assembly in communication with the moisture adsorption-desorption member to desorb moisture from at least part of the moisture adsorption-desorption member,
wherein the moisture adsorption-desorption member is arranged above or below the drum, and a plane where the moisture adsorption-desorption member is located is parallel to a rotational axis of the drum.

2. The clothing treatment apparatus according to claim 1, wherein the moisture adsorption-desorption member comprises:
a rotary disk housing provided therein with a partition member to at least divide the rotary disk housing into a moisture adsorption zone and a regeneration zone; and
a rotary disk accommodated in the rotary disk housing, wherein the rotary disk is arranged to rotate relative to the rotary disk housing,
wherein the moisture adsorption zone is in communication with the drum, and the regeneration zone is in communication with the heat pump heating assembly.

3. The clothing treatment apparatus according to claim 2, wherein the moisture adsorption-desorption member further comprises a driving assembly, and the driving assembly is configured to drive the rotary disk to rotate.

4. The clothing treatment apparatus according to claim 2, wherein the heat pump heating assembly comprises:
an evaporator in communication with the regeneration zone, and is configured to condense a regeneration airflow output from the regeneration zone to form a relatively low-temperature and dry regeneration airflow; and
a condenser in communication with the evaporator, and is configured to heat the relatively low-temperature and dry regeneration airflow to output to the regeneration zone, so as to desorb moisture from at least part of the rotary disk.

5. The clothing treatment apparatus according to claim 4, wherein the rotary disk housing comprises a first rotary disk housing and a second rotary disk housing;
the second rotary disk housing is provided with a first partition member to divide the second rotary disk housing into a first moisture adsorption zone and a first regeneration zone;
the first rotary disk housing is provided with a second partition member to divide the first rotary disk housing into a second moisture adsorption zone and a second regeneration zone; and
the second partition member is arranged opposite to the first partition member, and the rotary disk is located between the second partition member and the first partition member.

6. The clothing treatment apparatus according to claim 5, further comprising:
a regeneration housing in communication with the first regeneration zone and/or the second regeneration zone,
wherein the regeneration housing is located on one side of the rotary disk to desorb moisture from part of the rotary disk corresponding to the regeneration zone;
the regeneration housing is provided therein with an airflow space to form a third airflow channel; a gap is present between the other side of the rotary disk and an inner wall of the first regeneration zone of the second rotary disk housing to form a fourth airflow channel; and
the third airflow channel or the fourth airflow channel is in communication with the condenser, and the fourth airflow channel or the third airflow channel is in communication with the evaporator, so that the relatively low-temperature and dry regeneration airflow is heated through the condenser, enters the third airflow channel or the fourth airflow channel and passes through the rotary disk to reach the fourth airflow channel or the third airflow channel, and is then condensed through the evaporator to form the relatively low-temperature and dry regeneration airflow and re-enters the condenser for heating.

7. The clothing treatment apparatus according to claim 5 or 6, wherein in the second moisture adsorption zone, a gap is present between one side surface of the rotary disk and part of an inner wall of the first rotary disk housing to form a first airflow channel; in the first moisture adsorption zone, a gap is present between the other opposite side surface of the rotary disk and part of an inner wall of the second rotary disk housing to form a second airflow channel; and
the second airflow channel or the first airflow channel is in communication with a drum air outlet, and the first airflow channel or the second airflow channel is in communication with a drum air inlet, so that the humid airflow in the drum flows through the second airflow channel or the first airflow channel and passes through the rotary disk to reach the first airflow channel or the second airflow channel.

8. The clothing treatment apparatus according to claim 7, wherein the condenser is in communication with the drum air inlet and the moisture adsorption zone, so that the airflow in the moisture adsorption zone enters the condenser; and the condenser is configured to preheat a generated dry airflow before the generated dry airflow is input into the drum.

9. The clothing treatment apparatus according to claim 7, wherein the rotary disk housing is a circular structure, and a first partition member can be arranged along a radial direction of the second rotary disk housing to divide the second rotary disk housing into a first moisture adsorption zone and a first regeneration zone, such that both the first moisture adsorption zone and the first regeneration zone are sector-shaped spaces.

10. The clothing treatment apparatus according to any one of claims 4-6, further comprising a first switching mechanism, wherein the first switching mechanism is located between the condenser and the rotary disk housing, and the first switching mechanism is configured to control communication or disconnection between the condenser and the moisture adsorption zone.

11. The clothing treatment apparatus according to any one of claims 4-6, further comprising a second switching mechanism, wherein the second switching mechanism is located between the evaporator and the condenser, and the second switching mechanism is configured to control communication or disconnection between the evaporator and the condenser.

12. The clothing treatment apparatus according to claim 5 or 6, further comprising:
a first rigid member and a first flexible member sequentially stacked and arranged on the first partition member, wherein the first flexible member is adjacent to the rotary disk; and
a second rigid member and a second flexible member sequentially stacked and arranged on the second partition member, wherein the second flexible member is adjacent to the rotary disk,
wherein the first rigid member and/or the second rigid member are provided with a groove for accommodating the first flexible member and/or the second flexible member in a side facing the rotary disk; and the first flexible member and/or the second flexible member are arranged in the groove and protrude from an edge of the groove.

13. The clothing treatment apparatus according to claim 12, wherein the first flexible member and the second flexible member are respectively in contact with surfaces of the rotary disk; or
a gap of 0.2-2 mm is provided between the first flexible member and the rotary disk and between the second flexible member and the rotary disk.

14. The clothing treatment apparatus according to claim 8, wherein the drum air inlet and the drum air outlet are respectively arranged at two opposite ends of the rotational axis of the drum; the drum air inlet and/or the drum air outlet are higher than the rotational axis of the drum; or
the drum air inlet and/or the drum air outlet are higher than a highest water level in the drum.
